Europäisches Patentamt

**European Patent Office**

**Office européen des brevets**

(11) Publication number: **0 080 001**
A1

(12) # EUROPEAN PATENT APPLICATION

(21) Application number: **81830232.5**

(22) Date of filing: **19.11.81**

(51) Int. Cl.³: **A 01 G 25/00, E 01 C 13/00**

(43) Date of publication of application: **01.06.83**
**Bulletin 83/22**

(84) Designated Contracting States: **AT CH DE FR GB IT LI**

(71) Applicant: **Prevosto, Giorgio, Via per Iolo, n.97/A, I-50044 Iolo di Prato Firenze (IT)**
Applicant: **Prevosto, Luca, Via per Iolo, 97/A, I-50044 Iolo di Prato Firenze (IT)**

(72) Inventor: **Prevosto, Giorgio, Via per Iolo, n.97/A, I-50044 Iolo di Prato Firenze (IT)**
Inventor: **Prevosto, Luca, Via per Iolo, 97/A, I-50044 Iolo di Prato Firenze (IT)**

(74) Representative: **Sassatelli, Franco, c/o INIP Ufficio Internazionale Brevetti per Deposito di Brevetti e Marchi via Mazzini, 170, I-40139 Bologna (IT)**

(54) **Automatic device for uniform sprinkling of tennis playgrounds.**

(57) The device employs a delivery duct (23) with transversal disposition on a pair of parallel horizontal guides (5, 6) delimiting the playground; the delivery duct is pressure fed by means of nozzles (24) properly intervalled and it sprinkles all the underlying ground with a uniformly divided effect and progressively, progressing alternatively with a continuous movement in both senses.

The duct is supported at the ends by connections, with adjustable turnbuckles (29) and anchoring carriages, by a couple of dragging chains (3, 4) imposed on the above guides. The device start, from a central control station, automatically activates the pump (20) delivering the liquid into the duct and contemporarily lets it progress through the effect of the motor reducer (17, 18) couple which starts the two dragging chains in synchronism by means of pinions.

EP 0 080 001 A1

- 1 -

"Automatic device for uniform sprinkling of tennis playgrounds"
The invention refers to a processing that can be completely auto
matized for the uniform sprinkling of tennis playgrounds in beaten earth and covered with a brick powder lay, enabling in this
way a prompt and continuous reinstatement of the correct humidity grade of the ground without damaging it and without labour.

At present, fixed and mobile installations are for sprinkling
the tennis playing ground. The fixed installations foresee devices laid underground which can be started on the points pre-
arranged for sprinkling. The mobile ones use conducts that can
be connected in different ways to bring the liquid under pressu
re from the drawing sump to the stationing point where a delivery
device permits the rotating spout sprinkling. The first system
requires many sprinkling points, whereas the second one needs
one operator to shift the delivery device on the subsequent sprinkling spots. In addition, both systems operating with sprinkling points give rise to zones having different exposition, thus
causing a ground with parts having different grades of humidity.
Moreover, the sprinkle excess which can be noted on these parts
is damaging the ground as it desultorily changes its levelling
and elasticity.

The invented device permits the solution of the problems by ado-
pting the proceeding which performs the sprinkling of the tennis
playground in a uniformly distributed way and with light spout

0080001

- 2 -

according to phases to be completely automized; these conditions exclude damage and difformity of the playground treatment, avoid labour and permit·to operate the device at a distance by means of a control centre. This is possible by the fact that a delivery duct with transversal disposition is foreseen on two parallel, horizontal guides with transversal playground delimitation, pressure fed by flexible derivation ducts which, by means of nozzles properly fitted at intervals, sprinkle, with uniformly distributed effect and progressively, the whole underground, progressing alternatively with continous motion in both senses.

The duct which is moving on a horizontal plane, properly lying over the separation net, at the travel end inverts the movement sense to return to the starting line and so on until the pre-arranged operation cycle in the automatism is over. The duct is held at the ends, with connections with adjustable turnbuckles, by clamping carriages on couples of dragging chains fitted in the above guides and supported on gears of fixed part. By starting the device through a control centre, the pumping assembly is started automatically too which puts the liquid through the flexible duct into the delivery one and, at the same time, it progresses through the motor assemblies which activates the synchronism of the two dragging chains acting on the gears.

In a version, the fixed structure for the delivery duct translation is foreseen to be used also as enclosure of the tennis playground. This allows to solve a problem for simplifying the composition.

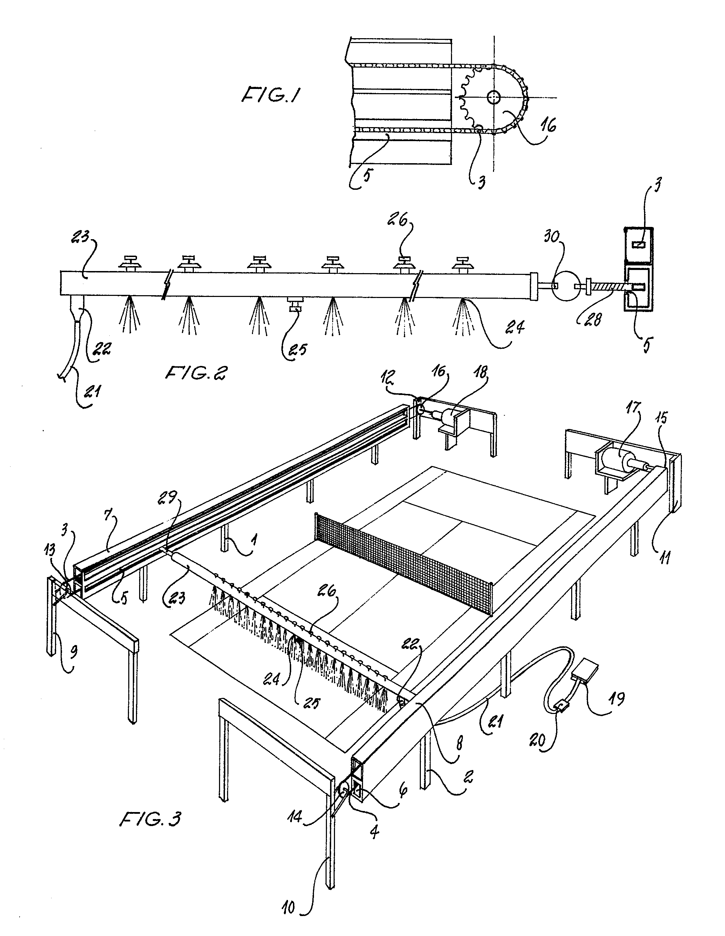

A not limiting form of execution is illustrated in the drawings of Table 1, where fig. 1 is seen in correspondence of a chain end supported on a toothed wheel and sliding with its lower part in a monorail, whereas its top in light section is brought integral on the first one. Fig. 2 is the view of the delivery duct showing the tension regulating device on one end with the carriage integral with the chain, as well as the connection of the feeding flexible duct can be seen on the other end. Furthermore the following parts can be noted: the spout regulators fitted on the relevant nozzles and the pressure relief valve. Fig. 3 is the perspective view of a tennis playground with sprinkling device acting also as enclosure and interlocking in operation. The version foresees the chain containing structures 3 and 4 formed by monorails 5 and 6 integrally fitted on the two ground sides on supports 1 and 2, integral with the supported sections 7 and 8. On the tops, columns 9, 10, 11 and 12 are foreseen which, by means of brackets, hold gear wheels 13, 14, 15 and 16 which support the above dragging chains. These ones are started by motor reducers 17 and 18 engaging gears 15 and 16. From sump 19, the liquid is drawn which by means of the pump assembly 20, through flexible duct 21 on connection 22, arrives in the stiff duct 23 to get out from nozzles 24.

The pressure excess is foreseen to be discharged by means of a special valve 25 properly adjustable. The spout can be controlled by means of screw registers 26 which can be operated separately. The connection of duct 23 to chains 3 and 4 is permitted by carriages 27 and 28. The tension regulation is allowed by the screw turnbuckles 29 and 30.

The processing is foreseen to be used for one or more playgrounds allowing thus to meet the requirements of an installation to be used either by private people or tennis centres. The installations are foreseen to be started by a distant control centre equipped with adjusting devices with a view to allowing a programming of the operation phases. The fixed structure devices, the motoring over means, the regulation and control devices, the materials and

- 4 -

everything else in order may be changed according to the requirements of employ.

- 1 -

CLAIMS

1) Automatic device for uniform sprinkling of tennis playgrounds, characterized by the fact that a delivery duct with transversal disposition is foreseen on two parallel, horizontal guides with transversal playground delimitation, pressure fed by flexible derivation ducts which, by means of nozzles properly fitted at intervals, sprinkle, with uniformly distributed effect and progressively, the whole underground, progressing alternatively with continuous motion in both senses. The duct which is moving on a horizontal plane, properly lying over the separation net, at the travel end inverts the movement sense to return to the starting line and so on until the pre-arranged operation cycle in the automatism is over.

2) Automatic device for uniform sprinkling of tennis playgrounds, according to the previuos claim, characterized by the fact that the duct is held at the ends, with connections with adjustable turnbuckles, by clamping carriages on couples of dragging chains fitted in the above guides and supported on gears of fixed part. By starting the device through a control centre, the pumping assembly is started automatically too which puts the liquid through the flexible duct into the delivery one and, at the same time, it progresses through the motor assemblies which activates the synchronism of the two dragging chains acting on the gears.

3) Automatic device for uniform sprinkling of tennis playgrounds, according to the previous claims, characterized by the fact that in a version, the fixed structure for the delivery duct translation is foreseen to be used also as enclosure of the tennis playground.

4) Automatic device for uniform sprinkling of tennis playgrounds, according to the previous claims, characterized by the fact that foresees the chain containing structures 3 and 4 formed by monorails 5 and 6 integrally fitted on the two ground sides on supports 1 and 2, integral with the supported sections 7 and 8. On the tops, columns 9, 10, 11 and 12 are foreseen which, by means of brackets, hold gear wheels 13, 14, 15 and 16 which support the above dragging chains. These ones are started by motor reducers 17 and 18 engaging gears 15 and 16. From sump 19, the liquid is drawn which by means of the pump assembly 20, through flexible duct 21 on connection 22, arrives in the stiff duct 23 to get out from nozzles 24. The pressure excess is foreseen to be discharged by means of a special valve 25 properly adjustable. The spout can be controlled by means of screw register 26 which can be operated separately.

5) Automatic device for uniform sprinkling of tennis playgrounds, according to the previous claims, characterized by the fact that the connection of duct 23 to chains 3 and 4 is permitted by carriages 27 and 28. The tension regulation is allowed by the screw turnbuckles 29 and 30.

0080001

1/1

FIG.1

FIG.2

FIG.3

European Patent Office

Application number

EP 81   83 0232.5

# EUROPEAN SEARCH REPORT

| Category | Citation of document with indication, where appropriate, of relevant passages | Relevant to claim |
|---|---|---|
| DOCUMENTS CONSIDERED TO BE RELEVANT | | |
| A | DE - U - 1 699 996 (MANNESMANN AG) <br> * claims 1, 2; page 1; fig. 1, 2 * | 1 |
| A | DE - A - 2 206 275 (H.-J. WINTER) <br> * page 1 to 8, paragraph 3; fig. 1 * | 1 |
| A | US - A - 3 799 444 (READ) <br> * column 2, lines 27 to 60; <br> fig. 1 to 3 * | 1,2 |
| A | AT - B - 334 953 (MARCEL BOSCHUNG) <br> * claim 1; page 4 * | 4 |
| A | GB - A - 1 432 417 (SIMON-HARTLEY <br> LTD.) | |

**CLASSIFICATION OF THE APPLICATION (Int. Cl. 3)**

A 01 G   25/00
E 01 C   13/00

**TECHNICAL FIELDS SEARCHED (Int.Cl. 3)**

A 01 G    9/00
A 01 G   25/00
B 05 B    1/00
B 05 B    3/00
E 01 C   13/00
E 01 H    3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 28-05-1982 | PAETZEL |

EPO Form 1503.1   06.78